(19) Europäisches Patentamt
European Patent Office
Office européen des brevets

(11) **EP 4 012 462 B1**

(12) **EUROPEAN PATENT SPECIFICATION**

(45) Date of publication and mention
of the grant of the patent:
**22.04.2026 Bulletin 2026/17**

(21) Application number: **21213476.1**

(22) Date of filing: **09.12.2021**

(51) International Patent Classification (IPC):
***G01V 5/00*** *(2024.01)*

(52) Cooperative Patent Classification (CPC):
**G01V 5/232; G01V 5/234**

(54) **OBJECT DETECTING DEVICE, OBJECT DETECTING METHOD, AND STORAGE MEDIUM**

OBJEKTERFASSUNGSVORRICHTUNG, OBJEKTERFASSUNGSVERFAHREN UND SPEICHERMEDIUM

DISPOSITIF DE DÉTECTION D'OBJET, PROCÉDÉ DE DÉTECTION D'OBJET ET SUPPORT D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.12.2020 CN 202011432974**

(43) Date of publication of application:
**15.06.2022 Bulletin 2022/24**

(73) Proprietor: **Nuctech Company Limited**
**TongFang Building**
**Shuangqinglu Road**
**Haidian District**
**Beijing 100084 (CN)**

(72) Inventors:
• **MING, Shenjin**
**BEIJING, 100084 (CN)**
• **CUI, Tongyuan**
**BEIJING, 100084 (CN)**
• **YANG, Yigang**
**BEIJING, 100084 (CN)**
• **SUN, Shangmin**
**BEIJING, 100084 (CN)**
• **ZONG, Chunguang**
**BEIJING, 100084 (CN)**
• **WANG, Dongyu**
**BEIJING, 100084 (CN)**
• **YU, Hao**
**BEIJING, 100084 (CN)**
• **LIU, Bicheng**
**BEIJING, 100084 (CN)**
• **SONG, Quanwei**
**BEIJING, 100084 (CN)**
• **FAN, Xuping**
**BEIJING, 100084 (CN)**
• **WANG, Weizhen**
**BEIJING, 100084 (CN)**
• **HU, Yu**
**BEIJING, 100084 (CN)**

(74) Representative: **Cabinet Beau de Loménie**
**103, rue de Grenelle**
**75340 Paris Cedex 07 (FR)**

(56) References cited:
**WO-A2-2013/181646    JP-A- 2009 175 065**
**US-A1- 2020 132 613**

**Description**

TECHNICAL FIELD

The embodiments of the present disclosure relate to a field of a security inspection, in particular to an object detecting device, an object detecting method, and a storage medium.

BACKGROUND

In order to ensure a public safety and reduce illegal crimes, a security inspection needs to be performed on an object at airports, stations, ports, logistics checkpoints and other places. The security inspection may include detecting whether explosives, drugs and other prohibited objects exist in the object or not. An existing object detecting method, such as an imaging method, a mass spectrometry method, etc., may be implemented to accurately detect whether the object contains a prohibited object, but cannot determine a spatial position of the prohibited object in the object, and thus fail to provide a powerful clue for a further inspection.

The following documents reflect related art to the present disclosure:

the US patent application publication No. US 2020/132613, which discloses method for a multi-element analysis via neutron activation;
the international patent application publication No. WO2013/181646A2, which provides a Time-of-Flight based neutron inspection system; and
the Japanese patent application publication No. JP2009175065A, which discloses an apparatus for simultaneously observing and measuring three-dimensional elemental distributions of a plurality of elements by neutron prompt gamma ray analysis.

SUMMARY

According to the embodiments of the present disclosure, there is proposed an object detecting device, an object detecting method, and a storage medium. The invention is defined by the appended claims.

In an aspect of the present disclosure, there is proposed an object detecting device according to claim 1.

In the invention according to the wording of the claims, the determining an angular orientation of a suspected target substance in the detected object based on the M detection signal quantities and a preset reference signal quantity includes: acquiring M reference signal quantities respectively corresponding to the M predetermined angles, wherein the reference signal quantity is pre-obtained by detecting a reference object not containing a target substance; determining an index parameter value for each predetermined angle of the M predetermined angles based on a detection signal quantity and the reference signal quantity, wherein the index parameter value indicates a ratio of an increment of the detection signal quantity relative to the reference signal quantity to a measurement noise; and determining the angular orientation of the suspected target substance in the detected object based on the respective index parameter values of the M predetermined angles.

According to the embodiments of the present disclosure, the detector is further configured to analyze the received gamma ray so as to obtain a gamma energy spectrum; the processor is further configured to: acquire the gamma energy spectrum from the detector; and determine a type of a target element contained in the detected object based on the gamma energy spectrum, the target element being used to determine a type of the suspected target substance.

In the invention according to the wording of the claims, the detector includes N sub-detectors arranged in a height direction of the object detecting device, and the N sub-detectors respectively correspond to N predetermined heights, where N is an integer greater than or equal to 2; the processor is further configured to: acquire N detection signal quantities respectively corresponding to the N predetermined heights; and determine a height position of the suspected target substance in the detected object based on the N detection signal quantities.

According to the embodiments of the present disclosure, the controlling the rotating component to rotate the detected object from an initial angle to at least M predetermined angles in sequence; and acquiring at least M detection signal quantities respectively corresponding to the M predetermined angles includes: acquiring an initial detection signal quantity when the detected object is at the initial angle; and controlling the rotating component to rotate the detected object by 180° from the initial angle, and acquiring the detection signal quantity when the detected object is at 180°.

According to the embodiments of the present disclosure, the controlling the rotating component to rotate the detected object from an initial angle to at least M predetermined angles in sequence; and acquiring at least M detection signal quantities respectively corresponding to the M predetermined angles includes: controlling the rotating component to rotate the detected object at a constant speed by 360° from the initial angle, and the detected object being rotated to a predetermined angle every predetermined period of time and a detection signal quantity at the predetermined angle being acquired during a rotation of the detected object, where M is an integer greater than or equal to 2.

According to the embodiments of the present disclosure, the processor is further configured to: acquire an initial detection signal quantity when the detected object is at the initial angle; determine an initial index parameter value based on the initial detection signal quantity and a preset reference signal quantity, the initial index parameter value being used to indicate a probability that the detected object contains the target element;

and determine, based on the initial index parameter value, whether to control to rotate the detected object.

According to the embodiments of the present disclosure, the processor is further configured to: determine a content range of the suspected target substance based on an index parameter value exceeding a preset threshold in the M index parameter values and a preset mass estimation information, wherein the mass estimation information includes a corresponding relationship between the index parameter value and the content range.

According to the embodiments of the present disclosure, the determining a type of a target substance contained in the detected object based on the gamma energy spectrum includes: determining an existence probability of each target element of a plurality of target elements based on a characteristic peak in the gamma energy spectrum; and determining the type of the target substance contained in the detected object based on the existence probability of each target element.

In another aspect of the present disclosure, there is proposed an object detecting method according to claim 6.

In the invention according to the wording of the claims, the determining an angular orientation of a suspected target substance in the detected object based on the M detection signal quantities and a preset reference signal quantity includes: acquiring M reference signal quantities respectively corresponding to the M predetermined angles, the reference signal quantity being pre-obtained by detecting a reference object not containing a target substance; determining an index parameter value for each predetermined angle of the M predetermined angles based on a detection signal quantity and the reference signal quantity, wherein the index parameter value indicates a ratio of an increment of the detection signal quantity relative to the reference signal quantity to a measurement noise; and determining the angular orientation of the suspected target substance in the detected object based on the respective index parameter values of the M predetermined angles.

According to the embodiments of the present disclosure, the object detecting method further includes: acquiring a gamma energy spectrum, the gamma energy spectrum being obtained by analyzing the gamma ray received by the detector; and determining a type of a target element contained in the detected object based on the gamma energy spectrum, the type of the target element being used to determine a type of the suspected target substance.

In the invention according to the wording of the claims, the object detecting method further includes: acquiring N detection signal quantities respectively corresponding to N predetermined heights, the N detection signal quantities being respectively acquired by N sub-detectors of the detector arranged in a height direction, where N is an integer greater than or equal to 2; and determining a height position of the suspected target substance in the detected object based on the N detection signal quantities.

According to the embodiments of the present disclosure, the controlling the rotating component to rotate the detected object from an initial angle to at least M predetermined angles in sequence; and acquiring at least M detection signal quantities respectively corresponding to the M predetermined angles includes: acquiring an initial detection signal quantity when the detected object is at the initial angle; and controlling the rotating component to rotate the detected object by 180° from the initial angle, and acquiring the detection signal quantity when the detected object is at 180°.

According to the embodiments of the present disclosure, the controlling the rotating component to rotate the detected object from an initial angle to at least M predetermined angles in sequence; and acquiring at least M detection signal quantities respectively corresponding to the M predetermined angles includes: controlling the rotating component to rotate the detected object at a constant speed by 360° from the initial angle, the detected object being rotated to a predetermined angle every predetermined period of time and a detection signal quantity at the predetermined angle being acquired during a rotation of the detected object, where M is an integer greater than or equal to 2.

According to the embodiments of the present disclosure, the object detecting method further includes: acquiring an initial detection signal quantity when the detected object is at the initial angle; determining an initial index parameter value based on the initial detection signal quantity and a preset reference signal quantity, the initial index parameter value being used to indicate a probability that the detected object contains the target element; and determining, based on the initial index parameter value, whether to control to rotate the detected object.

According to the embodiments of the present disclosure, the object detecting method further includes: determining a content range of the suspected target substance based on an index parameter value exceeding a preset threshold in the M index parameter values and a preset mass estimation information, wherein the mass estimation information includes a corresponding relationship between the index parameter value and the content range.

According to the embodiments of the present disclosure, the determining a type of a target substance contained in the detected object based on the gamma energy spectrum includes: determining an existence probability of each target element of a plurality of target elements based on a characteristic peak in the gamma energy spectrum; and determining the type of the target substance contained in the detected object based on the existence probability of each target element.

In another aspect of the present disclosure, there is proposed a computer-readable storage medium according to claim 11, having executable instructions stored thereon, and the instructions, when executed by a processor, cause the processor to implement the object detecting method described in any of the above embodiments.

According to the embodiments of the present disclosure, the neutron is used to react with the target substance (such as drugs, explosives, etc.) in the detected object to generate a gamma ray, and the detected object is controlled to rotate so that the signal quantity of the ray at some angles (or angle intervals) may be detected during the rotation, and then the angular orientation of the target substance in the detected object may be determined according to a magnitude of the signal quantity at each angle, so as to provide an object search clue for a further inspection. In addition, a non-destructive detection is performed by using the neutron, which may not cause damage to the inspected object and may meet a requirement of food safety.

BRIEF DESCRIPTION OF THE DRAWINGS

In order to better understand the embodiments of the present disclosure, the embodiments of the present disclosure will be described in detail based on the accompanying drawings.

FIG. 1 schematically shows an application scenario of an object detecting device and an object detecting method according to the embodiments of the present disclosure.
FIG. 2 schematically shows a top view structural diagram of the object detecting device according to the embodiments of the present disclosure.
FIG. 3 schematically shows a graph of a relationship between an angle and an index parameter value according to the embodiments of the present disclosure.
FIG. 4A schematically shows a schematic diagram of a y energy spectrum generated by a reaction between N element and thermal neutron according to the embodiments of the present disclosure.
FIG. 4B schematically shows a schematic diagram of a y energy spectrum generated by a reaction between Cl element and thermal neutron according to the embodiments of the present disclosure.
FIG. 5 schematically shows a graph of a relationship between an index parameter value and a mass according to the embodiments of the present disclosure.
FIG. 6 schematically shows a side view structural diagram of the object detecting device according to another embodiment of the present disclosure.
FIG. 7 schematically shows a graph of a relationship between a height and an index parameter value according to the embodiments of the present disclosure.
FIG. 8 schematically shows two relationship curves for an angle and an index parameter value according to the embodiments of the present disclosure.
FIG. 9 schematically shows a flowchart of an object detecting method according to the embodiments of the present disclosure.
FIG. 10 schematically shows a block diagram of an object detecting device according to the embodiments of the present disclosure.
FIG. 11 schematically shows a block diagram of an electronic device suitable for implementing the object detecting method according to the embodiments of the present disclosure.

DETAILED DESCRIPTION OF EMBODIMENTS

Specific embodiments of the present disclosure will be described in detail below. It should be noted that the embodiments described here are only used for exemplification and are not used to limit the embodiments of the present disclosure. In the following description, a number of specific details are set forth in order to provide a thorough understanding of the present disclosure. However, it will be apparent to those of ordinary skilled in the art that these specific details are not necessary to implement the embodiments of the present disclosure. In other examples, in order to avoid confusion with the present disclosure, well-known structures, materials, or methods are not specifically described.

Throughout the specification, references to "one embodiment," "an embodiment," "one example," or "an example" mean that a specific feature, structure, or characteristic described in conjunction with the embodiment or example is included in at least one embodiment of the present disclosure. Therefore, the phrases "in one embodiment", "in an embodiment", "one example" or "an example" appearing in various places throughout the specification do not necessarily refer to the same embodiment or example. Further, specific features, structures or characteristics may be combined in one or more embodiments or examples in any suitable combination and/or sub-combination. In addition, those of ordinary skilled in the art should understand that the term "and/or" as used here includes any and all combinations of one or more related listed items.

The embodiments of the present disclosure propose an object detecting device, an object detecting method, and a storage medium. The object detecting device includes a neutron source, a detector, a rotating component, and a processor. The neutron source is configured to release a neutron to a detected object, so that a neutron induced nuclear reaction occurs between the neutron and the detected object and a gamma ray is generated. The detector is configured to receive the gamma ray and analyze the gamma ray so as to obtain a detection signal quantity corresponding to the gamma ray. The rotating component is configured to carry the detected object and rotate the detected object with respect to the neutron source and the detector. The processor is configured to: control the rotating component to rotate the detected object from an initial angle to at least M predetermined angles in sequence; acquire at least M detection signal quantities respectively corresponding to the M predetermined angles, wherein M is an integer greater than or equal to 2; and determine an angular orientation of a suspected target substance in the detected object based on the M detection signal quantities and a preset reference signal quantity.

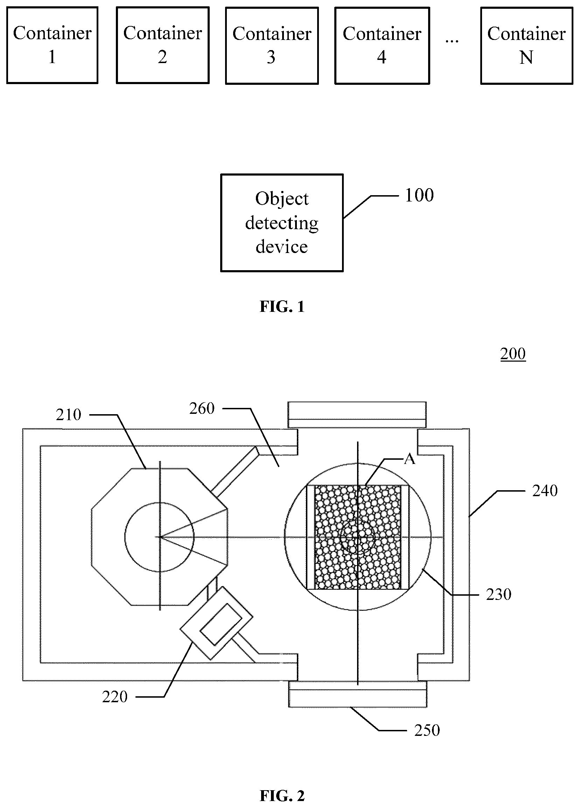

FIG. 1 schematically shows an application scenario of an object detecting device and an object detecting method according to the embodiments of the present disclosure. It should be noted that FIG. 1 only shows an example of the application scenario in which the embodiments of the present disclosure may be applied so as to help those skilled in the art understand technical contents of the present disclosure. It does not mean that the embodiments of the present disclosure may not be used for other apparatuses, systems, environments or scenes.

As shown in FIG. 1, an object detecting device 100 may, for example, detect a batch of containers (container 1 to container N) in sequence. One container may be placed in the object detecting device 100 at a time, and after a detection is performed, a next container may be placed. The container may contain, for example, a tray of fruits, that is, a tray is placed in the container, and a plurality of corrugated boxes containing fruits are stacked on the tray. A target substance may be, for example, explosives and drugs. After the container is placed into the object detecting device 100, the object detecting device 100 may detect whether explosives and drugs are hidden in the container.

For example, after a container is placed in the object detecting device 100, the neutron source in the object detecting device 100 may be used to release a neutron to the container. A neutron induced nuclear reaction may occur between the neutron and a substance contained in the container, and a γ (gamma) ray may be generated. The detector may receive and measure the γ ray so as to obtain a γ energy spectrum. Because the γ energy spectrum produced by a nuclear reaction corresponds to a type of an element involved in the reaction, a characteristic element in the object may be accurately identified through the γ energy spectrum. By performing an operation such as a spectrum unfolding on the γ energy spectrum, it is possible to determine the element involved in the reaction that brings a measured spectral line, and then initially determine whether a target substance exists or not according to the element type. For example, fruits mainly contain C (carbon) element, H (hydrogen) element and O (oxygen) element, while drugs generally contain Cl (chlorine) element and N (nitrogen) element and explosives contain N element. Therefore, if Cl element and N element are found in the container containing fruits, it may be initially determined that the container contains drugs, and if N element is found and Cl element is not found in the container containing fruits, it may be initially determined that the container contains explosives. In addition, it is also possible to estimate a content of each element through the γ energy spectrum, and further determine a type of a suspected target substance based on the type and content of the element. Alternatively, the type of the suspected target substance may be further determined by other means, such as an unpacking inspection.

The object detecting device 100 of the embodiments of the present disclosure may not only detect whether the suspected target substance is hidden in the container, but may also determine an angular orientation of the suspected target substance in the container, so as to provide a search clue for a further unpacking inspection. For example, the rotating component of the object detecting device 100 may be used to control a rotation of the container with respect to the neutron source and the detector. During the rotation, a signal quantity of gamma rays measured at different rotation angles may be detected. The signal quantity may refer to a count rate. Then, the orientation of the suspected target substance in the container may be determined according to the detection signal quantity at each angle and a magnitude of a reference signal quantity at the angle. The reference signal quantity may be obtained by detecting a reference object that does not contain the target substance. For example, an angle at which the detected signal quantity has the greatest relative increment with respect to the reference signal quantity may be determined as the angular orientation of the suspected target substance in the container. If a determined angle is 90°, the angular orientation of the suspected target substance is an orientation rotated away from a starting angle by about 90°.

It should be noted that the object detecting device and the object detecting method in the embodiments of the present disclosure may be not only implemented to detect the container, but also implemented to detect a luggage box, a package and other objects in airports, stations, ports, post offices, logistics checkpoints, and other public places.

FIG. 2 schematically shows a top view structural diagram of the object detecting device according to the embodiments of the present disclosure.

As shown in the top view of FIG. 2, an object detecting device 200 includes a neutron source 210, a detector 220, a rotating component 230, and a processor (not shown).

The neutron source 210 is configured to release a neutron to a detected object A, so that a neutron induced nuclear reaction occurs between the neutron and the detected object A and a gamma ray is generated.

According to the embodiments of the present disclosure, a nuclear reaction equation for a reaction of a neutron with a substance may include, for example, Equation (1) or Equation (2).

$$n + {}_{Z}^{A}X \rightarrow {}_{Z}^{A+1}X + \gamma \qquad \text{Equation (1)}$$

$$n + {}_{Z}^{A}X \rightarrow {}_{Z}^{A}X + n' + \gamma \quad \text{Equation (2)}$$

where n represents a neutron, X represents a substance contained in the detected object, A represents the number of nucleons of the substance X, Z represents the number of protons of the substance X, y represents the gamma ray, and n' represents a neutron after an energy change.

Some elements, such as Cl element and N element, are easy to react with a neutron. These elements may be called sensitive elements. A substance containing these sensitive elements, such as explosives and drugs, may be called a neutron-detection-sensitive substance, or a special substance. Whether an element is sensitive to a neutron is related to a cross section of the element. C element and O element have a small cross section, and a neutron is not easy to react with them. Cl element and N element have a large cross section, and a neutron is easy to react with them.

According to the embodiments of the present disclosure, the detector 220 is configured to receive the gamma ray and analyze the gamma ray so as to obtain a detection signal quantity corresponding to the gamma ray.

For example, the detector 220 may be a high-purity germanium spectrometer, which may measure an information such as a gamma energy spectrum corresponding to the gamma ray. The energy spectrum contains a count rate information, and the signal quantity may refer to, for example, a count rate. A magnitude of the detection signal quantity is related to a type of element. For example, the reaction between the Cl element and the neutron may generate relatively more gamma rays, so that a relatively large magnitude of signal quantity may be detected, while the reaction between the C element and the neutron may generate relatively less gamma rays, so that a relatively small magnitude of signal quantity may be detected. In addition, the signal quantity is further related to a position of the element in the detected object. For example, if Cl element is located on a side of the detected object close to the neutron source and the detector, there is not too much barrier material between the Cl element and the neutron source, and the neutron released by the neutron source may impact the Cl element with a large flux, so that relatively more gamma rays may be generated, and a relatively large magnitude of signal quantity may be detected. If the Cl element is located on a side of the detected object away from the neutron source and the detector, the neutron needs to pass through a thick barrier material to reach the Cl element, and when the neutron passes through the barrier material, the flux may be greatly reduced. The generated y ray also needs to pass through a thick barrier material to reach the detector, so that a relatively small magnitude of signal quantity may be detected.

According to the embodiments of the present disclosure, the rotating component 230 is configured to carry the detected object A and rotate the detected object A relative to the neutron source 210 and the detector 220.

For example, the rotating component 230 may be a turntable rotatable around its own central axis, and the detected object A may be placed at a central position of the rotating component 230. The neutron source 210 and the detector 220 may be fixed relative to a housing 240 of the object detecting device 200. The housing 240 may be, for example, a shielding wall with a shielding effect. In addition, the object detecting device may be further provided with a protective door 250 connected to the housing 240. The protective door 250 and the housing 240 may enclose a detection chamber 260, and the rotating component 230 is located in the detection chamber 260.

According to the embodiments of the present disclosure, the rotating component 230 may rotate, for example, at least 360°, that is, it may drive the detected object A to rotate for at least one cycle, so that all orientations of the detected object A may be detected.

According to the embodiments of the present disclosure, the processor is configured to: control the rotating component to rotate the detected object from an initial angle to at least M predetermined angles in sequence; acquire at least M detection signal quantities corresponding to the M predetermined angles, where M is an integer greater than or equal to 2; and determine an angular orientation (also known as an azimuth angle) of a suspected target substance in the detected object based on the M detection signal quantities and a preset reference signal quantity.

For example, when the detected object A is placed, a specific mark of the detected object A may face the detector 220, and an angle when the specific mark of the detected object A faces the detector 220 may be determined as the initial angle. The initial angle may be marked as, for example, 0°, and the M predetermined angles may be, for example, several angles evenly distributed in a range of 0° - 360°, which may include, for example, 0°, 60°, 120°, 180°, 240° and 300°. The rotating component 230 may be controlled to rotate the detected object A from the initial angle to the at least M predetermined angles in sequence, and the signal quantity at each predetermined angle may be detected using the detector 220, so as to obtain the detection signal quantity corresponding to each predetermined angle. According to the embodiments of the present disclosure, each predetermined angle may also represent an angle range. For example, 60° may represent an interval [30° - 90°], and 180° may represent an interval [150° - 210°]. In this case, the detector 220 may measure the detection signal quantity corresponding to several angle intervals.

Then, the angular orientation of the suspected target substance in the detected object A may be determined according to the M detection signal quantities corresponding to the M predetermined angles and the preset reference signal quantity. Since the detected object is not isotropic, a reference object that does not contain the target substance may be pre-detected to obtain the reference signal quantity at each predetermined angle. Then, in the detection of the detected object, a result of a comparison between the detection signal quantity and the reference signal quantity at the corresponding angle may be used as a condition for determining the azimuth angle of the target substance. For example, the predetermined angle at which the detection signal quantity has the most significant increment relative to the reference signal quantity may be determined as the azimuth angle of the suspected target substance in the detected object A.

According to the embodiments of the present disclosure, the neutron is used to react with the target substance (such as drugs, explosives, etc.) in the detected object to generate a gamma ray, and the detected object is controlled to rotate so that the signal quantity of the ray at some angles (or angle intervals) may be detected during the rotation, and then the angular orientation of the target substance in the detected object may be determined according to the detection signal quantity at each angle and the reference signal quantity, so as to provide an object search clue for a further inspection. In addition, a non-destructive detection is performed by using the neutron, which may not cause damage to the detected object and may meet a requirement of food safety.

In the invention according to the wording of the claims, the determining the angular orientation of the suspected target substance in the detected object based on the M detection signal quantities and the preset reference signal quantity may include: acquiring M reference signal quantities corresponding to the M predetermined angles respectively, wherein the reference signal quantity is pre-obtained by detecting the reference object not containing the target substance; determining an index parameter value for each predetermined angle of the M predetermined angles based on the detection signal quantity and the reference signal quantity, wherein the index parameter value indicates a ratio of an increment of the detection signal quantity relative to the reference signal quantity to a measurement noise; and determining the angular orientation of the suspected target substance in the detected object based on the respective index parameter values of the M predetermined angles.

For example, the reference signal quantity may be pre-obtained by detecting a reference object that does not contain the target substance and that has the same specification and similar content as the detected object A. According to the embodiments of the present disclosure, a significance of a change of the detection signal quantity relative to the reference signal quantity may be used as a criterion for the orientation of the suspected target substance. For example, at a predetermined angle, the reference signal quantity corresponding to the reference object is $N_0$, and the detection signal quantity corresponding to the detected object A is $N_1$. According to the law of Poisson distribution, an index parameter value k may be calculated by Equation (3).

$$k = \frac{N_1 - N_0}{\sqrt{N_1 + N_0}} \qquad \text{Equation (3)}$$

where $N_1 - N_0$ may represent the increment of the detection signal quantity relative to the reference signal quantity, and $\sqrt{N_1 + N_0}$ may represent the measurement noise.

According to the embodiments of the present disclosure, the index parameter value k may be used as a reference value for a probability that the detected object contains the target substance. For example, when k=1, it may be considered that there is a 68.3% probability of containing the target substance; when k=2, it may be considered that there is a 95.5% probability of containing the target substance; and when k=3, it may be considered that there is a 99.7% probability of containing the target substance.

During the rotation of the detected object, a change of the k value may be monitored in real time. If the k value exceeds a preset threshold (for example, 1.5) when the detected object is rotated to an angle, it may be initially determined that the detected object contains the target substance, then the apparatus may control an alarm device to issue an alarm information to prompt the staff. On the contrary, if the k value is always below the preset threshold after the detected object rotates for a cycle, it may be initially determined that the detected object does not contain the target substance and there is no need to alarm.

Based on the above method, the index parameter value corresponding to each predetermined angle may be obtained, and then the azimuth angle of the suspected target substance in the detected object may be determined according to the M index parameter values. For example, an angle corresponding to a greatest index parameter value of the M index parameter values may be selected as the azimuth angle of the suspected target substance in the detected object A.

In another embodiment of the present disclosure, a relationship curve between the M predetermined angles and the M index parameter values may be drawn, and an angle corresponding to a peak of the index parameter in the relationship curve may be determined as the azimuth angle of the suspected target substance in the detected object A.

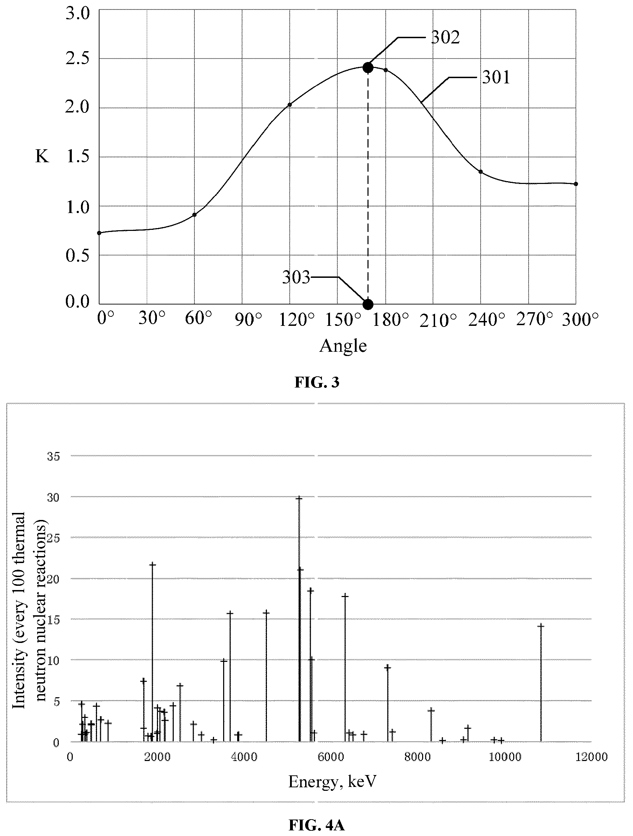

FIG. 3 schematically shows a graph of a relationship between the angle and the index parameter value according to the embodiments of the present disclosure.

As shown in FIG. 3, a relationship curve 301 is drawn by using a plurality of angles (0°, 60°, 120°, 180°, 240°, 300°) and the index parameter value corresponding to each angle. A peak 302 of the index parameter in the curve 301 and an angle 303 corresponding to the peak 302 may be found through an algorithm, and the angle 303 may be determined as the angle of the suspected target substance in the detected object, or an angle interval in which the angle 303 is located may be determined as an angle range of the suspected target substance in the detected object.

According to the embodiments of the present disclosure, the significance of the increment of the detection signal quantity relative to the reference signal quantity may be used as the criterion for the orientation of the suspected target substance, which is simple to calculate and may improve an accuracy of determination.

In another embodiment of the present disclosure, the index parameter value may also be expressed as an incremental percentage of the detection signal quantity relative to the reference signal quantity.

According to the embodiments of the present disclosure, the detector is further configured to obtain a gamma spectrum by analyzing the received gamma ray. The processor is further configured to: obtain the gamma spectrum from the detector; and determine a type of a target element contained in the detected object based on the gamma spectrum. The target element is used to determine a type of the suspected target substance.

According to the embodiments of the present disclosure, the reaction between each element with the neutron in Equation (1) or Equation (2) may generate a distinctive $\gamma$ energy spectrum, which is equivalent to a fingerprint of the element involved in the reaction. The neutron may refer to a thermal neutron or a cold neutron. Because the cold neutron and the thermal neutron have a very small difference in energy, an $\gamma$ energy spectrum generated by a reaction of the cold neutron with the substance is consistent with that generated by a reaction of the thermal neutron with the substance.

FIG. 4A schematically shows a schematic diagram of the y energy spectrum generated by a reaction of the N element with the thermal neutron according to the embodiments of the present disclosure.

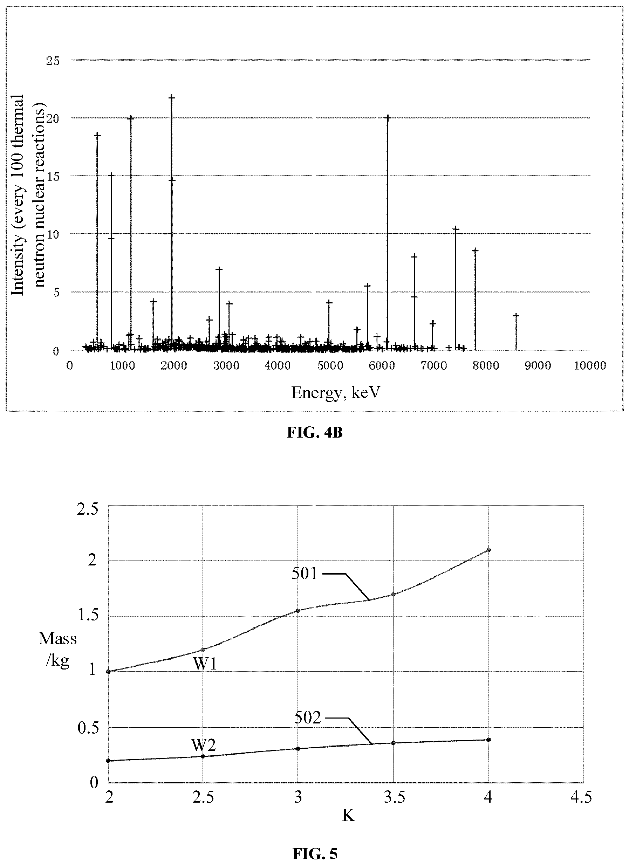

FIG. 4B schematically shows a schematic diagram of the y energy spectrum generated by a reaction of the Cl element with the thermal neutron according to the embodiments of the present disclosure.

As shown in FIG. 4A and FIG. 4B, there is a great difference between the $\gamma$ energy spectrum corresponding to the N element and the $\gamma$ energy spectrum corresponding to the Cl element. When the detected object contains a plurality of types of elements, a measured $\gamma$ energy spectrum is a result of a superposition of the y energy spectra of the plurality of types of elements. A characteristic peak of each element may be identified through an algorithm. Since characteristic peaks of different elements are located in different energy regions, the type of element may be determined according to the characteristic peak, and then an analysis may be made to determine the element involved in the reaction that brings the measured spectral line. After the elements involved in the reaction is determined, the target substance existing in the detected object may be initially determined. For example, if the Cl element and the N element are found in the container containing fruits, it may be initially determined that the container contains drugs. If the N element is found and the Cl element is not found in the container containing fruits, it may be initially determined that that the container contains explosives.

According to the embodiments of the present disclosure, a non-target substance may also contain sensitive elements such as Cl and N, for example, salt contains Cl element and Na element. In this case, a specific distinction may be made based on the application scenario. For example, if an inspector is told that the detected object is fruit but Cl element and N element are found in the detection process, it may be suspected that drugs are hidden in the fruit. If the inspector is told that the detected object is salt, a determination may be made in combination with other elements in the detection process. For example, if a content ratio of Cl element and Na element meets a composition ratio of salt and N element is not detected, it may be initially determined that drugs and explosives are not contained, or an analysis may be performed in combination with other means.

According to the embodiments of the present disclosure, determining the type of target substance contained in the detected object based on the gamma energy spectrum may further include: determining an existence probability of each target element of a plurality of target elements based on the characteristic peak in the gamma energy spectrum; and determine the type of target substance contained in the detected object and an existence probability of the target substance based on the existence probability of each target element.

For example, if the detected object contains the Cl element, the $\gamma$ energy spectrum measured by the detector may contain a plurality of characteristic peaks of the Cl element. Several significant characteristic peaks may be selected and used to determine the existence probability of the Cl element. Specifically, a determination may be made using method (1) or method (2) as follows.

In method (1), for each selected significant characteristic peak, a count rate of an energy interval where each characteristic peak is located is obtained, and a reference count rate in a reference energy spectrum corresponding to the energy interval where each characteristic peak is located is obtained. The reference energy spectrum may refer to the y energy spectrum of a container that has the same size and similar object as the detected object and that does not contain the target substance. Then, the k value corresponding to each characteristic peak is calculated by using Equation (3). After that, the k value corresponding to each characteristic peak may be weighted and summed to obtain a final k value corresponding to the Cl element. A weight for each characteristic peak may be determined according to a height of the characteristic peak. For example, the higher the peak, the greater the weight.

In method (2), for several selected characteristic peaks, a sum of the count rates corresponding to the several characteristic peaks may be taken as $N_1$, and a sum of the count rates of the corresponding energy intervals in the reference energy spectrum may be taken as $N_0$. The value calculated by Equation (3) may be taken as the k value corresponding to the Cl element.

If the existence probability of Cl element is greater than a preset threshold, it may be determined that the Cl element exists.

According to the embodiments of the present disclosure, the neutron may be used to react with the element in the detected object to obtain the γ energy spectrum, and the type of element contained in the detected object may be analyzed based on the γ energy spectrum, and then the type of target substance may be determined according to the type of element, which may solve a problem in a related art that the object detecting method such as the imaging method cannot determine the type of the target substance.

According to the embodiments of the present disclosure, when the spectrum unfolding is performed on the γ energy spectrum measured by the detector, there may be a need to use the reference energy spectrum. The reference energy spectrum refers to the γ energy spectrum pre-obtained by detecting the reference object that does not contain the target substance and that has the same specification and similar content as the detected object. By removing the reference energy spectrum on the basis of the energy spectrum of the detected object, the energy spectrum of other elements may be obtained. In a scenario where the detected object is a container containing a tray of fruits, the reference energy spectrum may be the γ energy spectrum of the container that has the same size and similar fruits and that does not contain a suspected object, or may be a classified average spectrum. The classified average spectrum may be an energy spectrum obtained by classifying and averaging energy spectral of a plurality of reference objects, in which a suspected energy spectrum may be eliminated in combination with an algorithm so as to improve an accuracy of the classified average spectrum.

According to the embodiments of the present disclosure, the controlling the rotating component to rotate the detected object from the initial angle to at least M predetermined angles in sequence and acquiring at least M detection signal quantities corresponding to the M predetermined angles performed by the processor may include: acquiring an initial detection signal quantity when the detected object is at the initial angle; controlling the rotating component to rotate the detected object by 180° from the initial angle, and acquiring the detection signal quantity when the detected object is at 180°.

For example, the detection may be performed only on opposite sides of the detected object. After the detected object is placed in the object detecting device, the initial signal quantity at the initial angle may be detected firstly, and the initial signal quantity at the initial angle and the reference signal quantity may be substituted into Equation (3) to obtain an initial index parameter value $k_1$. Then, the detected object is rotated by 180° to detect the other side so as to obtain the detection signal quantity at 180°, and the detection signal quantity at 180° and the reference signal quantity are substituted into Equation (3) to obtain an index parameter value $k_2$ at 180°. Then, the orientation of the target substance may be determined according to the k values on both sides. Based on this detection method, a detection efficiency may be improved while ensuring a certain detection accuracy.

According to another embodiment of the present disclosure, the controlling the rotating component to rotate the detected object from the initial angle to at least M predetermined angles in sequence and acquiring at least M detection signal quantities corresponding to the M predetermined angles performed by the processor may include: controlling the rotating component to rotate the detected object at a constant speed by 360° from the initial angle, rotating the detected object to a predetermined angle every predetermined time during the rotation of the detected object and acquiring the detection signal quantity at the corresponding predetermined angle, where M is an integer greater than or equal to 2.

For example, the detected object may be rotated at a constant speed by 360°, and the detection may be performed every predetermined period of time (e.g. 2s) until the detected object is rotated by 360° and returns to the initial angle. The angle corresponding to each detection may be determined according to the rotation speed and the detection time, and the detection signal quantity corresponding to the M predetermined angles may be obtained. Then, the k value at each predetermined angle may be calculated, and the orientation of the target substance may be determined according to the k value of each predetermined angle. Based on this detection method, the detection accuracy may be improved, and the azimuth angle of the target substance may be determined accurately.

According to another embodiment of the present disclosure, the processor may be further configured to: acquire the initial detection signal quantity when the detected object is at the initial angle; determine the initial index parameter value based on the initial detection signal quantity and the preset reference signal quantity, the initial index parameter value is used to characterize a probability of the detected object containing the target element; and determine, based on the initial index parameter value, whether to control to rotate the detected object.

For example, after the detected object is placed in the object detecting device, the initial signal quantity may be detected firstly, and the initial signal quantity and the reference signal quantity may be substituted into Equation (3) to obtain the initial index parameter value. The initial index parameter value may be used as an initial probability of the detected object containing a neutron-sensitive element (such as Cl element and N element) in addition to a known element (such as C element and O element).

When the initial index parameter value is less than a preset threshold (e.g., 1), it may be initially determined that the detected object does not contain the target substance, and there is no need to rotate the detected object. On the contrary, when the initial index parameter value is greater than or equal to the preset threshold, it may be initially determined that the detected object contains the target substance, and it is needed to further control to rotate the detected object, so as to determine the angle orientation of the target substance in the detected object. Based on this scheme, the efficiency of object detection may be improved.

In another embodiment of the present disclosure, the detected object may be rotated and detected without considering a size of the initial index parameter value. For example, when the initial index parameter value is less than the preset threshold, it may only be considered that the detected object does not contain the target material within this angle range, and the detected object may be rotated to detect situations at other angles. On the contrary, when the initial index parameter value is greater than or equal to the preset threshold, it may be considered that the detected object contains the target material within this angle range, and the detected object may be further rotated to determine whether the target substance further exists in other angle orientations of the detected object, and the azimuth angle of the target substance may be determined.

According to the embodiments of the present disclosure, the processor may be further configured to: determine a content range of the suspected target substance based on the index parameter value exceeding the preset threshold in the M index parameter values and a preset mass estimation information. The mass estimation information may include a corresponding relationship between the index parameter value and the content range.

For example, during the rotation of the detected object, if the k value exceeds the preset threshold at a certain angle and an alarm is issued, the k value exceeding the threshold may be used to query the preset mass estimation information to obtain the content range of the target substance.

According to the embodiments of the present disclosure, when the index parameter value k exceeds a threshold, a size of the k value has a positive correlation with an amount of the target substance, that is, the greater the k value, the greater the mass of the target substance. A corresponding relationship curve between the index parameter value k and the mass of the target material may be pre-drawn at a position where the target substance is most difficult to be detected. The position where the target substance is most difficult to be detected may refer to, for example, a position of the detected object away from the neutron source and the detector. Similarly, a corresponding relationship curve between the index parameter value k and the mass of the target substance may also be experimentally pre-drawn at a position where the target substance is easiest to be detected. The position where the target substance is easiest to be detected may refer to, for example, a position of the detected object close to the neutron source and the detector.

FIG. 5 schematically shows a relationship curve between the index parameter value and the content according to the embodiments of the present disclosure.

As shown in FIG. 5, a mass upper limit curve 501 and a mass lower limit curve 502 may be obtained. The mass upper limit curve 501 may be, for example, a corresponding relationship curve between the index parameter value k and the mass of the target substance drawn for the position where the object of interest is most difficult to be detected, and the mass lower limit curve 502 may be, for example, a corresponding relationship curve between the index parameter value k and the mass of the target substance drawn for the position where the object of interest is easiest to be detected.

If the k value measured at a certain angle during the rotation of a detected object exceeds an alarm threshold, an estimated range of the mass of the object of interest may be determined by these two curves. For example, if the measured index parameter value k is 2.5, it may be determined that the content of the target substance in the detected object is in a range of [W1, W2].

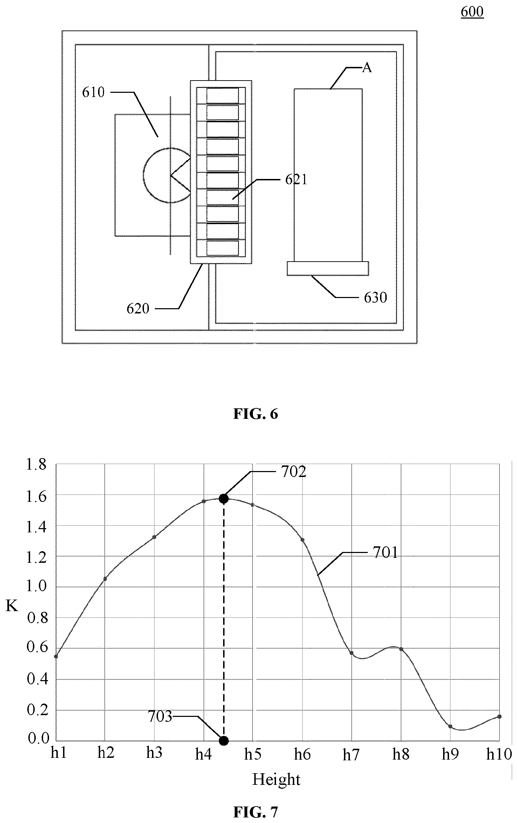

FIG. 6 schematically shows a side view structural diagram of an object detecting device 600 according to the invention according to the wording of the claims.

As shown in the side view of FIG. 6, according to the invention according to the wording of the claims, the object detecting device 600 includes a neutron source 610, a detector 620, and a rotating component 630. The detector 620 includes N sub-detectors 621 arranged in a height direction of the object detecting device 600. The N sub-detectors 621 correspond to N predetermined heights respectively, where N is an integer greater than or equal to 2. The processor is further configured to: acquire N detection signal quantities respectively corresponding to the N predetermined heights; determine a height position of the suspected target substance in the detected object A based on the N detection signal quantities.

In the invention according to the wording of the claims, the detector 620 is a detector array component including a plurality of sub-detectors arranged in the height direction to respectively receive rays at different heights. The detector 620 may include, for example, ten sub-detectors 621 respectively arranged at a height different from a carrier surface height of the rotating component 630 by h1, h2, h3, h4, h5, h6, h7, h8, h9 and h10. Each sub-detector 621 may analyze and obtain the detection signal quantity at the corresponding height. Then, the index parameter value at each predetermined height may be calculated based on the detection signal quantity and the reference signal quantity, and then the height position of the suspected target substance in the detected object A may be determined according to the index parameter value k corresponding to each height. For example, a height corresponding to the largest index parameter value of the N index parameter values may be determined as the height of the suspected target substance in the detected object A. According to the embodiments of the present disclosure, each predetermined height may also represent a height interval. In this case, each sub-detector 621 may measure the signal quantity corresponding to a height interval.

Since the detected object exhibits different properties at different heights, a reference object that does not contain the target substance may be pre-detected to obtain the reference signal quantity at each predetermined height, and then when the detected object is detected, a result of a comparison between the detection signal quantity and the reference signal quantity at the corresponding height may be used as a condition for determining the height where the target substance is located. For example, a predetermined height at which the detection signal quantity has the most significant increment relative to the reference signal quantity may be determined as the height of the suspected target substance in the detected object A.

In another embodiment of the present disclosure, a relationship curve may be drawn by using the N heights and the corresponding N index parameter values, and the height corresponding to the peak of the index parameter in the relationship curve may be determined as the height of the suspected target substance in the detected object A.

FIG. 7 schematically shows a graph of a relationship between the height and the index parameter value according to the embodiments of the present disclosure.

As shown in FIG. 7, a relationship curve 701 is drawn by using a plurality of heights (h1-h10) and the index parameter value corresponding to each height. A peak 702 of the index parameter in the curve 701 and a height 703 corresponding to the peak 702 may be found through an algorithm, and the height 703 may be determined as the height of the suspected target substance in the detected object.

According to the embodiments of the present disclosure, the signal quantities at a plurality of heights measured by a plurality of detectors at different heights may be obtained, and the height of the suspected target substance in the detected object may be determined according to the increment of the detection signal quantity relative to the reference signal quantity. Combined with the angle, the position of the suspected target substance in the detected object may be determined accurately.

According to the embodiments of the present disclosure, whether the suspected target substance is located in a central region or an edge region of the detected object may be determined according to a smoothness of the curve of the index parameter value k changing along the angle, that is, a polar radius range of the suspected target substance on a rotation plane may be determined according to the smoothness of the index parameter value k changing along the angle. The polar radius range may refer to a radial distance range between the suspected target substance and a central axis of the detected object. Through this scheme, the position of the suspected target substances may be further determined.

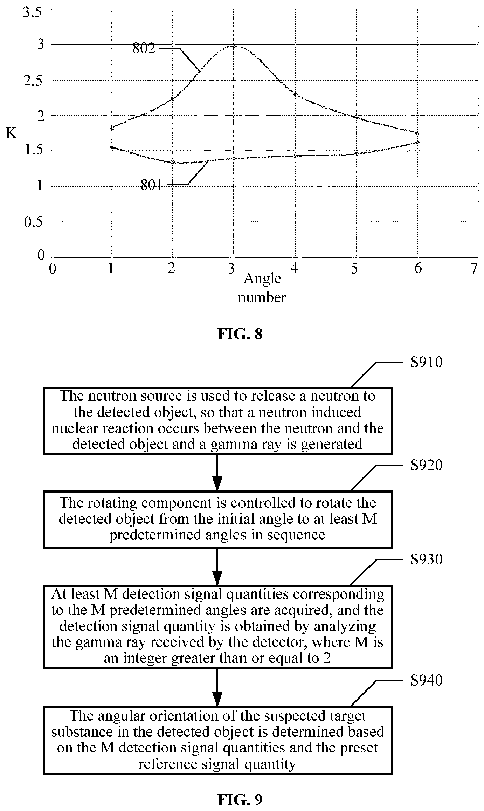

FIG. 8 schematically shows two relationship curves between the angle and the index parameter value according to the embodiments of the present disclosure.

As shown in FIG. 8, the smoother the curve of the k value changing along the angle, the closer the target substance is to the central axis of the detected object in the radial direction, as shown in curve 801. On the contrary, the sharper the curve of the k value changing along the angle, the closer the target substance is to a surface of the detected object in the radial direction, as shown in curve 802.

According to the embodiments of the present disclosure, it is possible to detect whether the detected object contains the suspected target substance or not. Further, if the suspected target substance exists, the angle of the suspected target substance and/or the height of the suspected target substance and/or an approximate position of the suspected target substance in the radial direction may be determined, and the mass of the suspected target substance may be roughly estimated. The present disclosure may be implemented to effectively detect explosives and has important practical significance in counter-terrorism and homeland security, and may be further implemented to effectively detect drugs and has a strong application prospect in the field of anti-drug. It is particularly effective for the detection of drugs or explosives hidden in the object such as the fruit tray. For a situation that the suspected target substance may be evenly distributed in the detected object, the object detecting device may be still widely used after the positioning function is turned off, for example, used in a detection and content analysis of a valuable component in minerals, an analysis of salt content in concrete, and so on.

Another aspect of the embodiments of the present disclosure provides an object detecting method performed by the object detecting device described above.

FIG. 9 schematically shows a flowchart of an object detecting method according to the embodiments of the present disclosure.

As shown in Fig. 9, the object detecting method includes operation S910 to operation S940.

In operation S910, the neutron source is used to release a neutron to the detected object, so that a neutron induced nuclear reaction occurs between the neutron and the detected object and a gamma ray is generated.

In operation S920, the rotating component is controlled to rotate the detected object from the initial angle to at least M predetermined angles in sequence.

In operation S930, at least M detection signal quantities corresponding to the M predetermined angles are acquired, and the detection signal quantity is obtained by analyzing the gamma ray received by the detector, where M is an integer greater than or equal to 2.

In operation S940, the angular orientation of the suspected target substance in the detected object is determined based on the M detection signal quantities and the preset reference signal quantity.

In the invention according to the wording of the claims, determining the angular orientation of the suspected target substance in the detected object based on the M detection signal quantities and the preset reference signal quantity includes: acquiring M reference signal quantities respectively corresponding to the M predetermined angles, where the reference signal quantity is pre-obtained by detecting the reference object that does not contain the target substance; determining the index parameter value for each predetermined angle of the M predetermined angles based on the detection signal quantity and the reference signal quantity, where the index parameter value represents a ratio of an increment of the detection signal quantity relative to the reference signal quantity to a measurement noise; and determining the angular orientation of the suspected target substance in the detected object based on the respective index parameter values of the M predetermined angles.

According to the embodiments of the present disclosure, the object detecting method may further include: obtaining a gamma spectrum by analyzing the gamma ray received by the detector; determining the type of target element contained in the detected object based on the gamma spectrum, the type of target element being used to determine the type of the suspected target substance.

In the invention according to the wording of the claims, the object detecting method further includes: acquiring N detection signal quantities respectively corresponding to N predetermined heights, the N detection signal quantities being respectively obtained by N sub-detectors of the detector arranged in the height direction, where N is an integer greater than or equal to 2; and determining the height position of the suspected target substance in the detected object based on the N signal quantities.

According to the embodiments of the present disclosure, controlling the rotating component to rotate the detected object from the initial angle to at least M predetermined angles, and acquiring at least M detection signal quantities corresponding to the M predetermined angles may include: acquiring the initial detection signal quantity when the detected object is at the initial angle; and controlling the rotating component to rotate the detected object by 180° from the initial angle, and acquiring the detection signal quantity when the detected object is at 180°.

According to the embodiments of the present disclosure, controlling the rotating component to rotate the detected object from the initial angle to the at least M predetermined angles in sequence, and acquiring at least M detection signal quantities corresponding to the M predetermined angles may include: controlling the rotating component to rotate the detected object at a constant speed by 360° from the initial angle, rotating the detected object to a predetermined angle every predetermined period of time during the rotation of the detected object, and acquiring the detection signal quantity at the corresponding predetermined angle, where M is an integer greater than or equal to 2.

According to the embodiments of the present disclosure, the object detecting method may further include: acquiring the initial detection signal quantity when the detected object is at the initial angle; determining the initial index parameter value based on the initial detection signal quantity and the preset reference signal quantity, where the initial index parameter value is used to characterize the probability of the detected object containing the target element; and determining, based on the initial index parameter value, whether to control to rotate the detected object.

According to the embodiments of the present disclosure, the object detecting method may further include: determining the content range of the suspected target substance based on the index parameter value exceeding the preset threshold in the M index parameter values and the preset mass estimation information, where the mass estimation information includes the corresponding relationship between the index parameter value and the content range.

According to the embodiments of the present disclosure, determining the type of the target substance contained in the detected object based on the gamma energy spectrum may include: determining the existence probability of each target element of the plurality of target elements based on the characteristic peak in the gamma energy spectrum; and determining the type of the target substance contained in the detected object based on the existence probability of each target element.

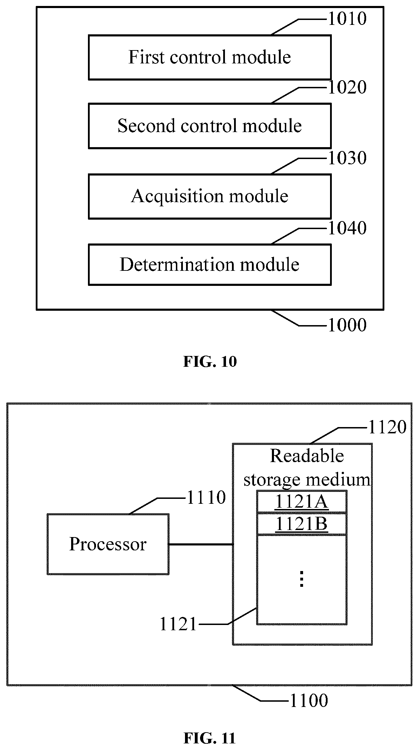

FIG. 10 schematically shows a block diagram of an object detecting device according to the embodiments of the present disclosure.

As shown in FIG. 10, an object detecting device 1000 may include a first control module 1010, a second control module 1020, an acquisition module 1030 and a determination module 1040.

The first control module 1010 is used to release a neutron to the detected object by using a neutron source, so that a neutron induced nuclear reaction occurs between the neutron and the detected object and a gamma ray is generated.

The second control module 1020 is used to control the rotating component to rotate the detected object from the initial angle to at least M predetermined angles in sequence.

The acquisition module 1030 is used to acquire at least M detection signal quantities respectively corresponding to the M predetermined angles, and the detection signal quantity is obtained by analyzing the gamma ray received by the detector, where M is an integer greater than or equal to 2.

The determination module 1040 is used to determine the angle orientation of the suspected target substance in the detected object based on the M detection signal quantities and the preset reference signal quantity.

Any two or more of the modules, sub-modules, units and subunits according to the embodiments of the present disclosure, or at least part of the functions of any two or more of them may be implemented in one module. Any one or more of the modules, sub-modules, units and subunits according to the embodiments of the present disclosure may be split into multiple modules for implementation. Any one or more of the modules, sub-modules, units and subunits according to the embodiments of the present disclosure may be implemented at least partially as a hardware circuit, such as a field programmable gate array (FPGA), a programmable logic array (PLA), a system on a chip, a system on a substrate, a system on a package, an Application Specific Integrated Circuit (ASIC), or may be implemented by hardware or firmware in any other reasonable way that integrates or encapsulates the circuit, or may be implemented by any one of the three implementation modes of software, hardware and firmware or an appropriate combination thereof. Alternatively, one or more of the modules, sub-modules, units and subunits according to the embodiments of the present disclosure may be at least partially implemented as a computer program module that, when executed, performs the corresponding functions.

It should be noted that the part of the embodiments of the object detecting device of the present disclosure corresponds to the part of the embodiments of the object detecting method of the present disclosure. The description of the object detecting device may refer to that of the object detecting method, which will not be repeated here.

FIG. 11 schematically shows a block diagram of an electronic device suitable for implementing the method described above according to the embodiments of the present disclosure. The electronic device shown in FIG. 11 is only an example and should not bring any limitation to the function and scope of use of the embodiments of the present disclosure.

As shown in FIG. 11, an electronic device 1100 includes a processor 1110 and a computer-readable storage medium 1120. The electronic device 1100 may perform the method according to the embodiments of the present disclosure.

Specifically, the processor 1110 may include, for example, a general-purpose microprocessor, an instruction set processor and/or a related chipset and/or a special-purpose microprocessor (for example, an application specific integrated circuit (ASIC)), and the like. The processor 1110 may further include an on-board memory for caching purposes. The processor 1110 may be a single processing unit or a plurality of processing units for executing different actions of the method flow according to the embodiments of the present disclosure.

The computer-readable storage medium 1120, for example, may be a non-transitory computer-readable storage medium. Specific examples include, but are not limited to: a magnetic storage device, such as a magnetic tape or a hard disk (HDD); an optical storage device, such as a compact disc (CD-ROM); a memory, such as a random access memory (RAM) or a flash memory; and so on.

The computer-readable storage medium 1120 may contain a computer program 1121. The computer program 1121 may contain code/computer-executable instructions that, when executed by the processor 1110, cause the processor 1110 to perform the method according to the embodiments of the present disclosure or any modification thereof.

The computer program 1121 may be configured as a computer program code containing, for example, a computer program module. For example, in an exemplary embodiment, the code in the computer program 1121 may contain one or more program modules, such as 1121A, 1121B,... It should be noted that the division method and number of modules are not fixed. Those skilled in the art may use appropriate program modules or program module combinations according to actual conditions. When executed by the processor 1110, these program module combinations may cause the processor 1110 to perform the method according to the embodiments of the present disclosure or any modification thereof.

According to the embodiments of the present disclosure, at least one of the first control module 1010, the second control module 1020, the acquisition module 1030 and the determination module 1040 may be implemented as a computer program module described above with reference to FIG. 11 that, when executed by the processor 1110, may implement the corresponding operations described above.

Another aspect of the present disclosure provides a computer-readable storage medium applied to the object detecting device described above. The computer-readable storage medium has executable instructions stored thereon, and the instructions, when executed by a processor, causes the processor to implement the object detecting method described above.

The present disclosure further provides a computer-readable storage medium, which may be included in the apparatus/device/system described in the above embodiments; or exist alone without being assembled into the apparatus/device/system. The above-mentioned computer-readable storage medium may carry one or more programs that when executed, implement the method according to the embodiments of the present disclosure.

According to the embodiments of the present disclosure, the computer-readable storage medium may be a non-transitory computer-readable storage medium that, for example, may include but not limited to: a portable computer disk, a hard disk, a random access memory (RAM), a read-only memory (ROM), an erasable programmable read-only memory (EPROM or flash memory), a portable compact disk read-only memory (CD-ROM), an optical storage device, a magnetic storage device, or any suitable combination of the above. In the present disclosure, the computer-readable storage medium may be any tangible medium that contains or stores programs that may be used by or in combination with an instruction execution system, apparatus or device.

The flowcharts and block diagrams in the accompanying drawings illustrate the possible architecture, functions, and operations of the system, method, and computer program product according to various embodiments of the present disclosure. In this regard, each block in the flowcharts or block diagrams may represent a part of a module, a program segment, or a code, which part includes one or more executable instructions for implementing the specified logical function. It should be further noted that, in some alternative implementations, the functions noted in the blocks may also occur in a different order from that noted in the accompanying drawings. For example, two blocks shown in succession may actually be executed substantially in parallel, or they may sometimes be executed in a reverse order, depending on the functions involved. It should be further noted that each block in the block diagrams or flowcharts, and the combination of blocks in the block diagrams or flowcharts, may be implemented by a dedicated hardware-based system that performs the specified functions or operations, or may be implemented by a combination of dedicated hardware and computer instructions.

The scope of the invention is defined by the appended claims.

## Claims

1. An object detecting device (100, 200, 600), comprising:

   a neutron source (210, 610) configured to release a neutron to a detected object (A), so that a neutron induced nuclear reaction occurs between the neutron and the detected object (A) and a gamma ray is generated;
   a detector (220, 620) configured to receive the gamma ray and analyze the gamma ray, so as to obtain a detection signal quantity corresponding to the gamma ray;
   a rotating component (230, 630) configured to carry the detected object (A) and rotate the detected object (A) relative to the neutron source (210, 610) and the detector (220, 620);

   and
   a processor configured to: control the rotating component (230, 630) to rotate the detected object (A) from an initial angle to at least M predetermined angles in sequence, where M is an integer greater than or equal to 2; acquire at least M detection signal quantities respectively corresponding to the M predetermined angles; and determine an angular orientation of a suspected target substance in the detected object (A) based on the M detection signal quantities and a preset reference signal quantity, wherein,

   the detector (220, 620) comprises N subdetectors (621) arranged in a height direction of the object detecting device (100, 200, 600), and the N sub-detectors (621) respectively correspond to N predetermined heights, where N is an integer greater than or equal to 2, and the processor is further configured to: acquire N detection signal quantities respectively corresponding to the N predetermined heights; and determine a height position of the suspected target substance in the detected object (A) based on the N detection signal quantities,
   **characterized in that**
   in determining the angular orientation of the suspected target substance in the detected object (A) based on the M detection signal quantities and the preset reference signal quantity, the processor is further configured to:

   acquire M reference signal quantities respectively corresponding to the M predetermined angles, wherein the reference signal quantity is pre-obtained by detecting a reference object not containing a target substance;
   determine an index parameter value for each predetermined angle of the M predetermined angles based on a detection signal quantity and the reference signal quantity, wherein the index parameter value indicates a ratio of an increment of the detection signal quantity relative to the reference signal quantity to a measurement noise; and
   determine the angular orientation of the suspected target substance in the detected object (A) based on the respective index parameter values of the M predetermined angles.

2. The object detecting device (100, 200, 600) of any preceding claim, wherein,

the detector (220, 620) is further configured to analyze the received gamma ray so as to obtain a gamma energy spectrum;
the processor is further configured to: acquire the gamma energy spectrum from the detector (220, 620); and determine a type of a target element contained in the detected object (A) based on the gamma energy spectrum, wherein the target element is used to determine a type of the suspected target substance.

3. The object detecting device (100, 200, 600) of any preceding claim, wherein the processor is further configured to:

acquire an initial detection signal quantity when the detected object (A) is at the initial angle;
determine an initial index parameter value based on the initial detection signal quantity and a preset reference signal quantity, wherein the initial index parameter value is used to indicate a probability that the detected object (A) contains the target element; and
determine, based on the initial index parameter value, whether to control to rotate the detected object (A).

4. The object detecting device (100, 200, 600) of claim 1, wherein the processor is further configured to:

determine a content range of the suspected target substance based on an index parameter value exceeding a preset threshold in the M index parameter values and a preset mass estimation information, wherein the mass estimation information includes a corresponding relationship between the index parameter value and the content range,
wherein the content range is a range of [W2, W1], W1 is a value corresponding to the index parameter value on a mass upper limit curve, W2 is a value corresponding to the index parameter value on a mass lower limit curve, the mass upper limit curve is a corresponding relationship curve between the index parameter value and mass of the suspected target substance drawn for a position where the detected object (A) is most difficult to be detected, and the mass lower limit curve is a corresponding relationship curve between the index parameter value and the mass of the suspected target substance drawn for the position where the detected object (A) is easiest to be detected, and wherein in a case that the index parameter value exceeds the preset threshold, the index parameter value has a positive correlation with the mass of the suspected target substance.

5. The object detecting device (100, 200, 600) of claim 2, wherein determining a type of a target substance contained in the detected object (A) based on the gamma energy spectrum comprises:

determining an existence probability of each target element of a plurality of target elements based on a characteristic peak in the gamma energy spectrum; and
determining the type of the target substance contained in the detected object (A) based on the existence probability of each target element.

6. An object detecting method performed by the object detecting device (100, 200, 600) of claim 1, comprising:

releasing a neutron to a detected object (A) by using a neutron source (210, 610), so that a neutron induced nuclear reaction occurs between the neutron and the detected object (A) and a gamma ray is generated (S910);
controlling a rotating component (230, 630) to rotate the detected object (A) from an initial angle to at least M predetermined angles in sequence (S920);
acquiring at least M detection signal quantities respectively corresponding to the M predetermined angles, wherein the detection signal quantity is obtained by analyzing the gamma ray received by the detector (220, 620), where M is an integer greater than or equal to 2 (S930);
determining an angular orientation of a suspected target substance in the detected object (A) based on the M detection signal quantities and a preset reference signal quantity (S940);
acquiring N detection signal quantities respectively corresponding to N predetermined heights, wherein the N detection signal quantities are respectively acquired by N sub-detectors (621) of the detector (220, 620) arranged in a height direction, where N is an integer greater than or equal to 2; and
determining a height position of the suspected target substance in the detected object (A) based on the N detection signal quantities,
the method being **characterized by** further comprising the steps of
determining an angular orientation of a suspected target substance in the detected object (A) based on the M detection signal quantities and a preset reference signal quantity comprises:

acquiring M reference signal quantities respectively corresponding to the M predetermined angles, wherein the reference signal quantity is pre-obtained by detecting a reference object not containing a target substance;

determining an index parameter value for each predetermined angle of the M predetermined angles based on a detection signal quantity and the reference signal quantity, wherein the index parameter value indicates a ratio of an increment of the detection signal quantity relative to the reference signal quantity to a measurement noise; and

determining the angular orientation of the suspected target substance in the detected object (A) based on the respective index parameter values of the M predetermined angles.

7. The object detecting method of any preceding claim, further comprising:

acquiring a gamma energy spectrum, wherein the gamma energy spectrum is obtained by analyzing the gamma ray received by the detector (220, 620); and

determining a type of a target element contained in the detected object (A) based on the gamma energy spectrum, wherein the type of the target element is used to determine a type of the suspected target substance.

8. The object detecting method of any preceding claim, further comprising:

acquiring an initial detection signal quantity when the detected object (A) is at the initial angle;

determining an initial index parameter value based on the initial detection signal quantity and a preset reference signal quantity, wherein the initial index parameter value is used to indicate a probability that the detected object (A) contains the target element; and

determining, based on the initial index parameter value, whether to control to rotate the detected object (A).

9. The object detecting method of claim 6, further comprising:

determining a content range of the suspected target substance based on an index parameter value exceeding a preset threshold in the M index parameter values and a preset mass estimation information, wherein the mass estimation information includes a corresponding relationship between the index parameter value and the content range,

wherein the content range is a range of [W2, W1], W1 is a value corresponding to the index parameter value on a mass upper limit curve, W2 is a value corresponding to the index parameter value on a mass lower limit curve, the mass upper limit curve is a corresponding relationship curve between the index parameter value and mass of the suspected target substance drawn for a position where the detected object (A) is most difficult to be detected, and the mass lower limit curve is a corresponding relationship curve between the index parameter value and the mass of the suspected target substance drawn for the position where the detected object (A) is easiest to be detected, and wherein in a case that the index parameter value exceeds the preset threshold, the index parameter value has a positive correlation with the mass of the suspected target substance.

10. The object detecting method of claim 7, wherein the determining a type of a target substance contained in the detected object (A) based on the gamma energy spectrum comprises:

determining an existence probability of each target element of a plurality of target elements based on a characteristic peak in the gamma energy spectrum; and

determining the type of the target substance contained in the detected object (A) based on the existence probability of each target element.

11. A computer-readable storage medium (1120) having executable instructions stored thereon, applied to an object detecting device (100, 200, 600) comprising a neutron source (210, 610), a detector (220, 620) and a rotating component (230, 630), wherein the instructions, when executed by a processor (1110), cause the processor (1110) to implement the object detecting method of any of the preceding claims 6 to 10.

**Patentansprüche**

1. Objektdetektierungsvorrichtung (100, 200, 600), umfassend:

eine Neutronenquelle (210, 610), die dazu ausgebildet ist, ein Neutron zu einem detektierten Objekt (A) auszusenden, so dass eine neutroneninduzierte nukleare Reaktion zwischen dem Neutron und dem detektierten Objekt (A) stattfindet und ein Gammastrahl generiert wird, einen Detektor (220, 620), der dazu ausgebildet ist, den Gammastrahl zu empfangen und den Gammastrahl zu analysieren, um einen dem Gammastrahl entsprechenden Detektionssignalbetrag zu erhalten,

eine Drehkomponente (230, 630), die dazu ausgebildet ist, das detektierte Objekt (A) zu tragen und das detektierte Objekt (A) relativ zu der Neutronenquelle (210, 610) und dem Detektor (220, 620) zu drehen, und

einen Prozessor, der ausgebildet ist zum: Veranlassen der Drehkomponente (230, 630), das detektierte Objekt (A) nacheinander von einem anfänglichen Winkel zu mindestens M zuvor festgelegten Winkeln zu drehen, wobei M eine ganze Zahl größer als oder gleich 2 ist, Erfassen von mindestens M Detektionssignalbeträgen, die jeweils den M zuvor festgelegten Winkeln entsprechen, und Bestimmen einer Winkelausrichtung einer vermuteten Zielsubstanz in dem detektierten Objekt (A) auf der Grundlage der M Detektionssignalbeträge und eines voreingestellten Referenzsignalbetrages, wobei

der Detektor (220, 620) N Unterdetektoren (621) umfasst, die in einer Höhenrichtung der Objektdetektierungsvorrichtung (100, 200, 600) angeordnet sind, und die N Unterdetektoren (621) jeweils N zuvor festgelegten Höhen entsprechen, wobei N eine ganze Zahl größer als oder gleich 2 ist, und der Prozessor ferner ausgebildet ist zum: Erfassen von N Detektionssignalbeträgen, die jeweils den N zuvor festgelegten Höhen entsprechen, und Bestimmen einer Höhenposition der vermuteten Zielsubstanz in dem detektierten Objekt (A) auf der Grundlage der N Detektionssignalbeträge,

**dadurch gekennzeichnet, dass**

beim Bestimmen der Winkelausrichtung der vermuteten Zielsubstanz in dem detektierten Objekt (A) auf der Grundlage der M Detektionssignalbeträge und des voreingestellten Referenzsignalbetrages der Prozessor ferner ausgebildet ist zum:

Erfassen von M Referenzsignalbeträgen, die jeweils den M zuvor festgelegten Winkeln entsprechen, wobei der Referenzsignalbetrag durch Detektieren eines Referenzobjekts, das keine Zielsubstanz enthält, vorab erhalten wird,

Bestimmen eines Indexparameterwertes für jeden zuvor festgelegten Winkel der M zuvor festgelegten Winkel auf der Grundlage eines Detektionssignalbetrages und des Referenzsignalbetrages, wobei der Indexparameterwert ein Verhältnis eines Inkrements des Detektionssignalbetrages relativ zu dem Referenzsignalbetrag zu einem Messrauschen angibt, und

Bestimmen der Winkelausrichtung der vermuteten Zielsubstanz in dem detektierten Objekt (A) auf der Grundlage der jeweiligen Indexparameterwerte der M zuvor festgelegten Winkel.

2. Objektdetektierungsvorrichtung (100, 200, 600) nach einem der vorangehenden Ansprüche, wobei

der Detektor (220, 620) ferner dazu ausgebildet ist, den empfangenen Gammastrahl zu analysieren, um ein Gammaenergiespektrum zu erhalten,

der Prozessor ferner ausgebildet ist zum: Erfassen des Gammaenergiespektrums von dem Detektor (220, 620), und Bestimmen eines Typs eines in dem detektierten Objekt (A) enthaltenen Zielelements auf der Grundlage des Gammaenergiespektrums, wobei das Zielelement verwendet wird, um einen Typ der vermuteten Zielsubstanz zu bestimmen.

3. Objektdetektierungsvorrichtung (100, 200, 600) nach einem der vorangehenden Ansprüche, wobei der Prozessor ferner ausgebildet ist zum:

Erfassen eines anfänglichen Detektionssignalbetrages, wenn sich das detektierte Objekt (A) in dem anfänglichen Winkel befindet,

Bestimmen eines anfänglichen Indexparameterwertes auf der Grundlage des anfänglichen Detektionssignalbetrages und eines voreingestellten Referenzsignalbetrages, wobei der anfängliche Indexparameterwert verwendet wird, um eine Wahrscheinlichkeit anzugeben, dass das detektierte Objekt (A) das Zielelement enthält, und

Bestimmen, auf der Grundlage des anfänglichen Indexparameterwertes, ob veranlasst werden soll, das detektierte Objekt (A) zu drehen.

4. Objektdetektierungsvorrichtung (100, 200, 600) nach Anspruch 1, wobei der Prozessor ferner ausgebildet ist zum:

Bestimmen eines Gehaltsbereichs der vermuteten Zielsubstanz auf der Grundlage, dass ein Indexparameterwert eine voreingestellte Schwelle in den M Indexparameterwerten überschreitet, und einer voreingestellten Massenschätzungsinformation, wobei die Massenschätzungsinformation eine entsprechende Beziehung zwischen dem Indexparameterwert und dem Gehaltsbereich umfasst,

wobei der Gehaltsbereich ein Bereich von [W2, W1] ist, W1 ein Wert ist, der dem Indexparameterwert auf einer Massenobergrenzenkurve entspricht, W2 ein Wert ist, der dem Indexparameterwert auf einer Massenuntergrenzenkurve entspricht, die Massenoberflächengrenzkurve eine entsprechende Beziehungskurve zwischen dem Indexparameterwert und der Masse der vermuteten Zielsubstanz ist, die für eine Position gezeichnet ist, wo das detektierte Objekt (A) am schwierigsten zu detektieren ist, und die Massenunterflächengrenzkurve eine entsprechende Beziehungskurve zwischen dem Indexparameterwert und der Masse der vermuteten Zielsubstanz ist, die für die Position gezeichnet ist, wo das detektierte Objekt (A) am einfachsten zu detektieren ist, und wobei in einem Fall, in dem der Indexparameterwert die voreingestellte Schwelle überschreitet, der Indexparameterwert eine positive Korrelation mit der Masse der vermuteten Zielsubstanz aufweist.

5. Objektdetektierungsvorrichtung (100, 200, 600) nach Anspruch 2, wobei das Bestimmen eines Typs einer in dem detektierten Objekt (A) enthaltenen Zielsubstanz auf der Grundlage des Gamma-Energiespektrums umfasst:

Bestimmen einer Vorhandenseinswahrscheinlichkeit jedes Zielelements mehrerer Zielelemente auf der Grundlage einer charakteristischen Spitze in dem Gammaenergiespektrum, und Bestimmen des Typs der in dem detektierten Objekt (A) enthaltenen Zielsubstanz auf der Grundlage der Vorhandenseinswahrscheinlichkeit jedes Zielelements.

6. Objektdetektierungsverfahren, das durch die Objektdetektierungsvorrichtung (100, 200, 600) nach Anspruch 1 durchgeführt wird, umfassend:

Aussenden eines Neutrons zu einem detektierten Objekt (A) unter Verwendung einer Neutronenquelle (210, 610), so dass eine neutroneninduzierte nukleare Reaktion zwischen dem Neutron und dem detektierten Objekt (A) stattfindet und ein Gammastrahl generiert wird (S910), Veranlassen einer Drehkomponente (230, 630), das detektierte Objekt (A) nacheinander von einem anfänglichen Winkel zu mindestens M zuvor festgelegten Winkeln zu drehen (S920), Erfassen von mindestens M Detektionssignalbeträgen, die jeweils den M zuvor festgelegten Winkeln entsprechen, wobei die Detektionssignalbeträge durch Analysieren des durch den Detektor (220, 620) empfangenen Gammastrahls erhalten werden, wobei M eine ganze Zahl größer als oder gleich 2 ist (S930), Bestimmen einer Winkelausrichtung einer vermuteten Zielsubstanz in dem detektierten Objekt (A) auf der Grundlage der M Detektionssignalbeträge und eines voreingestellten Referenzsignalbetrages (S940), Erfassen von N Detektionssignalbeträgen, die jeweils N zuvor festgelegten Höhen entsprechen, wobei die N Detektionssignalbeträge jeweils durch N Unterdetektoren (621) des Detektors (220, 620) erfasst werden, die in einer Höhenrichtung angeordnet sind, wobei N eine ganze Zahl größer als oder gleich 2 ist, und Bestimmen einer Höhenposition der vermuteten Zielsubstanz in dem detektierten Objekt (A) auf der Grundlage der N Detektionssignalbeträge, wobei das Verfahren **dadurch gekennzeichnet ist, dass** es ferner die folgenden Schritte umfasst:

Bestimmen einer Winkelausrichtung einer vermuteten Zielsubstanz in dem detektierten Objekt (A) auf der Grundlage der M Detektionssignalbeträge und eines voreingestellten Referenzsignalbetrages, Erfassen von M Referenzsignalbeträgen, die jeweils den M zuvor festgelegten Winkeln entsprechen, wobei der Referenzsignalbetrag durch Detektieren eines Referenzobjekts, das keine Zielsubstanz enthält, vorab erhalten wird, Bestimmen eines Indexparameterwertes für jeden zuvor festgelegten Winkel der M zuvor festgelegten Winkel auf der Grundlage eines Detektionssignalbetrages und des Referenzsignalbetrages, wobei der Indexparameterwert ein Verhältnis eines Inkrements des Detektionssignalbetrages relativ zu dem Referenzsignalbetrag zu einem Messrauschen angibt, und Bestimmen der Winkelausrichtung der vermuteten Zielsubstanz in dem detektierten Objekt (A) auf der Grundlage der jeweiligen Indexparameterwerte der M zuvor festgelegten Winkel.

7. Objektdetektierungsverfahren nach einem der vorangehenden Ansprüche, ferner umfassend:

Erfassen eines Gamma-Energiespektrums, wobei das GammaEnergiespektrum durch Analysieren des durch den Detektor (220, 620) empfangenen Gammastrahls erhalten wird, und Bestimmen eines Typs eines in dem detektierten Objekt (A) enthaltenen Zielelements auf der Grundlage des Gammaenergiespektrums, wobei der Typ des Zielelements verwendet wird, um einen Typ der vermuteten Zielsubstanz zu bestimmen.

8. Objektdetektierungsverfahren nach einem der vorangehenden Ansprüche, ferner umfassend:

Erfassen eines anfänglichen Detektionssignalbetrages, wenn sich das detektierte Objekt (A) in dem anfänglichen Winkel befindet,

Bestimmen eines anfänglichen Indexparameterwertes auf der Grundlage des anfänglichen Detektionssignalbetrages und eines voreingestellten Referenzsignalbetrages, wobei der anfängliche Indexparameterwert verwendet wird, um eine Wahrscheinlichkeit anzugeben, dass das detektierte Objekt (A) das Zielelement enthält, und

Bestimmen, auf der Grundlage des anfänglichen Indexparameterwertes, ob veranlasst werden soll, das detektierte Objekt (A) zu drehen.

9. Objektdetektierungsverfahren nach Anspruch 6, ferner umfassend:

Bestimmen eines Gehaltsbereichs der vermuteten Zielsubstanz auf der Grundlage, dass ein Indexparameterwert eine voreingestellte Schwelle in den M Indexparameterwerten überschreitet, und einer voreingestellten Massenschätzungsinformation, wobei die Massenschätzungsinformation eine entsprechende Beziehung zwischen dem Indexparameterwert und dem Gehaltsbereich umfasst,

wobei der Gehaltsbereich ein Bereich von [W2, W1] ist, W1 ein Wert ist, der dem Indexparameterwert auf einer Massenobergrenzenkurve entspricht, W2 ein Wert ist, der dem Indexparameterwert auf einer Massenuntergrenzenkurve entspricht, die Massenoberflächengrenzkurve eine entsprechende Beziehungskurve zwischen dem Indexparameterwert und der Masse der vermuteten Zielsubstanz ist, die für eine Position gezeichnet ist, wo das detektierte Objekt (A) am schwierigsten zu detektieren ist, und die Massenunterflächengrenzkurve eine entsprechende Beziehungskurve zwischen dem Indexparameterwert und der Masse der vermuteten Zielsubstanz ist, die für die Position gezeichnet ist, wo das detektierte Objekt (A) am einfachsten zu detektieren ist, und

wobei in einem Fall, in dem der Indexparameterwert die voreingestellte Schwelle überschreitet, der Indexparameterwert eine positive Korrelation mit der Masse der vermuteten Zielsubstanz aufweist.

10. Objektdetektierungsverfahren nach Anspruch 7, wobei das Bestimmen eines Typs einer in dem detektierten Objekt (A) enthaltenen Zielsubstanz auf der Grundlage des Gamma-Energiespektrums umfasst:

Bestimmen einer Vorhandenseinswahrscheinlichkeit jedes Zielelements mehrerer Zielelemente auf der Grundlage einer charakteristischen Spitze in dem Gammaenergiespektrum, und

Bestimmen des Typs der in dem detektierten Objekt (A) enthaltenen Zielsubstanz auf der Grundlage der Vorhandenseinswahrscheinlichkeit jedes Zielelements.

11. Computerlesbares Speichermedium (1120), auf dem ausführbare Instruktionen gespeichert sind und das auf eine Objektdetektierungsvorrichtung (100, 200, 600) angewendet wird, umfassend eine Neutronenquelle (210, 610), einen Detektor (220, 620) und eine Drehkomponente (230, 630), wobei die Instruktionen, wenn sie durch einen Prozessor (1110) ausgeführt werden, den Prozessor (1110) veranlassen, das Objektdetektierungsverfahren nach einem der vorangehenden Ansprüche 6 bis 10 zu implementieren.

**Revendications**

1. Dispositif de détection d'objet (100, 200, 600), comprenant :

une source de neutrons (210, 610) configurée pour libérer un neutron vers un objet détecté (A) de sorte qu'une réaction nucléaire induite par neutron se produise entre le neutron et l'objet détecté (A) et qu'un rayon gamma soit généré ;
un détecteur (220, 620) configuré pour recevoir le rayon gamma et analyser le rayon gamma de sorte à obtenir une quantité de signaux de détection correspondant au rayon gamma ;
un composant rotatif (230, 630) configuré pour transporter l'objet détecté (A) et faire tourner l'objet détecté (A) par rapport à la source de neutrons (210, 610) et au détecteur (220, 620) ; et

un processeur configuré pour : commander le composant rotatif (230, 630) pour faire tourner l'objet détecté (A) d'un angle initial à au moins M angles prédéterminés en séquence, où M est un nombre entier supérieur ou égal à 2 ; acquérir au moins M quantités de signaux de détection correspondant respectivement aux M angles prédéterminés ; et déterminer une orientation angulaire d'une substance cible suspectée dans l'objet détecté (A) sur la base des M quantités de signaux de détection et d'une quantité de signaux de référence prédéfinie, dans lequel, le détecteur (220, 620) comprend N sous-détecteurs (621) agencés dans une direction de hauteur du dispositif de détection d'objet (100, 200, 600), et les N sous-détecteurs (621) correspondent respectivement à N hauteurs prédéterminées, où N est un nombre entier supérieur ou égal à 2, et le processeur est en outre configuré pour : acquérir N quantités de signaux de détection correspondant respectivement aux N hauteurs prédéterminées ; et déterminer une position de hauteur de la substance cible suspectée dans l'objet détecté (A) sur la base des N quantités de signaux de détection,

**caractérisé en ce que**

lors de la détermination de l'orientation angulaire de la substance cible suspectée dans l'objet détecté (A) sur la base des M quantités de signaux de détection et de la quantité de signaux de référence prédéfinie, le processeur est en outre configuré pour :

acquérir M quantités de signaux de référence correspondant respectivement aux M angles prédéterminés, dans lequel la quantité de signaux de référence est préalablement obtenue en détectant un objet de référence ne contenant pas de substance cible ;

déterminer une valeur de paramètre d'indice pour chaque angle prédéterminé des M angles prédéterminés sur la base d'une quantité de signaux de détection et de la quantité de signaux de référence, dans lequel la valeur de paramètre d'indice indique un rapport d'un incrément de la quantité de signaux de détection par rapport à la quantité de signaux de référence sur un bruit de mesure ; et

déterminer l'orientation angulaire de la substance cible suspectée dans l'objet détecté (A) sur la base des valeurs de paramètre d'indice respectives des M angles prédéterminés.

2. Dispositif de détection d'objet (100, 200, 600) selon l'une des revendications précédentes, dans lequel

le détecteur (220, 620) est en outre configuré pour analyser le rayon gamma reçu de sorte à obtenir un spectre d'énergie gamma ;

le processeur est en outre configuré pour : acquérir le spectre d'énergie gamma à partir du détecteur (220, 620) ; et déterminer un type d'un élément cible contenu dans l'objet détecté (A) sur la base du spectre d'énergie gamma, dans lequel l'élément cible est utilisé pour déterminer un type de la substance cible suspectée.

3. Dispositif de détection d'objet (100, 200, 600) selon l'une des revendications précédentes, dans lequel le processeur est en outre configuré pour :

acquérir une quantité de signaux de détection initiale lorsque l'objet détecté (A) se trouve à l'angle initial ;

déterminer une valeur de paramètre d'indice initiale sur la base de la quantité de signaux de détection initiale et d'une quantité de signaux de référence prédéfinie, dans lequel la valeur de paramètre d'indice initiale est utilisée pour indiquer une probabilité que l'objet détecté (A) contienne l'élément cible ; et

sur la base de la valeur de paramètre d'indice initiale, déterminer s'il faut commander la rotation de l'objet détecté (A).

4. Dispositif de détection d'objet (100, 200, 600) selon la revendication 1, dans lequel le processeur est en outre configuré pour :

déterminer une plage de contenu de la substance cible suspectée sur la base d'une valeur de paramètre d'indice des M valeurs de paramètre d'indice dépassant un seuil prédéfini et d'informations d'estimation de masse prédéfinies, dans lequel les informations d'estimation de masse comportent une relation correspondante entre la valeur de paramètre d'indice et la plage de contenu,

dans lequel la plage de contenu est une plage [W2, W1], W1 est une valeur correspondant à la valeur de paramètre d'indice sur une courbe de limite supérieure de masse, W2 est une valeur correspondant à la valeur de paramètre d'indice sur une courbe de limite inférieure de masse, la courbe de limite supérieure de masse est une courbe de relation correspondante entre la valeur de paramètre d'indice et la masse de la substance cible suspectée tracée pour une position où l'objet détecté (A) est le plus difficile à détecter, et la courbe de limite inférieure de masse est une courbe de relation correspondante entre la valeur de paramètre d'indice et la masse de la substance cible suspectée tracée pour la position où l'objet détecté (A) est le plus facile à détecter, et

dans lequel, dans le cas où la valeur de paramètre d'indice dépasse le seuil prédéfini, la valeur de paramètre d'indice présente une corrélation positive avec la masse de la substance cible suspectée.

5. Dispositif de détection d'objet (100, 200, 600) selon la revendication 2, dans lequel la détermination d'un type d'une substance cible contenue dans l'objet détecté (A) sur la base du spectre d'énergie gamma comprend :

la détermination d'une probabilité d'existence de chaque élément cible d'une pluralité d'éléments cibles sur la base d'un pic caractéristique dans le spectre d'énergie gamma ; et la détermination du type de la substance cible contenue dans l'objet détecté (A) sur la base de la probabilité d'existence de chaque élément cible.

**6.** Procédé de détection d'objet mis en œuvre par le dispositif de détection d'objet (100, 200, 600) selon la revendication 1, comprenant les étapes suivantes :

libérer un neutron vers un objet détecté (A) à l'aide d'une source de neutrons (210, 610) de sorte qu'une réaction nucléaire induite par neutron se produise entre le neutron et l'objet détecté (A) et qu'un rayon gamma soit généré (S910) ;

commander un composant rotatif (230, 630) pour faire tourner l'objet détecté (A) d'un angle initial à au moins M angles prédéterminés en séquence (S920) ;

acquérir au moins M quantités de signaux de détection correspondant respectivement aux M angles prédéterminés, dans lequel la quantité de signaux de détection est obtenue en analysant le rayon gamma reçu par le détecteur (220, 620), où M est un nombre entier supérieur ou égal à 2 (S930) ;

déterminer une orientation angulaire d'une substance cible suspectée dans l'objet détecté (A) sur la base des M quantités de signaux de détection et d'une quantité de signaux de référence prédéfinie (S940) ;

acquérir N quantités de signaux de détection correspondant respectivement à N hauteurs prédéterminées, dans lequel les N quantités de signaux de détection sont respectivement acquises par N sous-détecteurs (621) du détecteur (220, 620) agencés dans une direction de hauteur, où N est un nombre entier supérieur ou égal à 2 ; et

déterminer une position de hauteur de la substance cible suspectée dans l'objet détecté (A) sur la base des N quantités de signaux de détection,

le procédé étant **caractérisé en ce qu'**il comprend en outre les étapes suivantes déterminer une orientation angulaire d'une substance cible suspectée dans l'objet détecté (A) sur la base des M quantités de signaux de détection et d'une quantité de signaux de référence prédéfinie, comprenant ce qui suit :

acquérir M quantités de signaux de référence correspondant respectivement aux M angles prédéterminés, dans lequel la quantité de signaux de référence est préalablement obtenue en détectant un objet de référence ne contenant pas de substance cible ;

déterminer une valeur de paramètre d'indice pour chaque angle prédéterminé des M angles prédéterminés sur la base d'une quantité de signaux de détection et de la quantité de signaux de référence, dans lequel la valeur de paramètre d'indice indique un rapport d'un incrément de la quantité de signaux de détection par rapport à la quantité de signaux de référence sur un bruit de mesure ; et

déterminer l'orientation angulaire de la substance cible suspectée dans l'objet détecté (A) sur la base des valeurs de paramètre d'indice respectives des M angles prédéterminés.

**7.** Procédé de détection d'objet selon l'une des revendications précédentes, comprenant en outre les étapes suivantes :

acquérir un spectre d'énergie gamma, dans lequel le spectre d'énergie gamma est obtenu en analysant le rayon gamma reçu par le détecteur (220, 620) ; et

déterminer un type d'un élément cible contenu dans l'objet détecté (A) sur la base du spectre d'énergie gamma, dans lequel le type de l'élément cible est utilisé pour déterminer un type de la substance cible suspectée.

**8.** Procédé de détection d'objet selon l'une des revendications précédentes, comprenant en outre les étapes suivantes :

acquérir une quantité de signaux de détection initiale lorsque l'objet détecté (A) se trouve à l'angle initial ;

déterminer une valeur de paramètre d'indice initiale sur la base de la quantité de signaux de détection initiale et d'une quantité de signaux de référence prédéfinie, dans lequel la valeur de paramètre d'indice initiale est utilisée pour indiquer une probabilité que l'objet détecté (A) contienne l'élément cible ; et

sur la base de la valeur de paramètre d'indice initiale, déterminer s'il faut commander la rotation de l'objet détecté (A).

**9.** Procédé de détection d'objet selon la revendication 6, comprenant en outre les étapes suivantes :

déterminer une plage de contenu de la substance cible suspectée sur la base d'une valeur de paramètre d'indice des M valeurs de paramètre d'indice dépassant un seuil prédéfini et d'informations d'estimation de masse prédéfinies, dans lequel les informations d'estimation de masse comportent une relation correspondante entre la valeur de paramètre d'indice et la plage de contenu,

dans lequel la plage de contenu est une plage [W2, W1], W1 est une valeur correspondant à la valeur de paramètre d'indice sur une courbe de limite supérieure de masse, W2 est une valeur correspondant à la valeur de paramètre d'indice sur une courbe de limite inférieure de masse, la courbe de limite supérieure de masse est une courbe de relation correspondante entre la valeur de paramètre d'indice et la masse de la substance cible suspectée tracée pour une position où l'objet détecté (A) est le plus difficile à détecter, et la courbe de limite inférieure de masse est une courbe de relation correspondante entre la valeur de paramètre d'indice et la masse de la substance cible suspectée tracée pour la position où l'objet détecté (A) est le plus facile à détecter, et

dans lequel, dans le cas où la valeur de paramètre d'indice dépasse le seuil prédéfini, la valeur de paramètre d'indice présente une corrélation positive avec la masse de la substance cible suspectée.

**10.** Procédé de détection d'objet selon la revendication 7, dans lequel la détermination d'un type d'une substance cible contenue dans l'objet détecté (A) sur la base du spectre d'énergie gamma comprend :

la détermination d'une probabilité d'existence de chaque élément cible d'une pluralité d'éléments cibles sur la base d'un pic caractéristique dans le spectre d'énergie gamma ; et
la détermination du type de la substance cible contenue dans l'objet détecté (A) sur la base de la probabilité d'existence de chaque élément cible.

**11.** Support de stockage lisible par ordinateur (1120) sur lequel sont stockées des instructions exécutables, appliqué à un dispositif de détection d'objet (100, 200, 600) comprenant une source de neutrons (210, 610), un détecteur (220, 620) et un composant rotatif (230, 630), dans lequel les instructions, lorsqu'elles sont exécutées par un processeur (1110), amènent le processeur (1110) à mettre en œuvre le procédé de détection d'objet selon l'une des revendications 6 à 10 précédentes.

| Container 1 | Container 2 | Container 3 | Container 4 | ... | Container N |

Object detecting device —— 100

**FIG. 1**

<u>200</u>

210  260  A  240  230  220  250

**FIG. 2**

**FIG. 3**

**FIG. 4A**

**FIG. 4B**

**FIG. 5**

600

**FIG. 6**

**FIG. 7**

**FIG. 8**

S910

The neutron source is used to release a neutron to the detected object, so that a neutron induced nuclear reaction occurs between the neutron and the detected object and a gamma ray is generated

S920

The rotating component is controlled to rotate the detected object from the initial angle to at least M predetermined angles in sequence

S930

At least M detection signal quantities corresponding to the M predetermined angles are acquired, and the detection signal quantity is obtained by analyzing the gamma ray received by the detector, where M is an integer greater than or equal to 2

S940

The angular orientation of the suspected target substance in the detected object is determined based on the M detection signal quantities and the preset reference signal quantity

**FIG. 9**

First control module —1010

Second control module —1020

Acquisition module —1030

Determination module —1040

—1000

**FIG. 10**

Readable storage medium —1120

Processor —1110

1121A

1121B

⋮

1121—

—1100

**FIG. 11**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020132613 A
- WO 2013181646 A2
- JP 2009175065 A